# EUROPÄISCHE PATENTANMELDUNG

(11) **EP 2 388 194 A2**
(43) Veröffentlichungstag der Anmeldung: **23.11.2011**
(21) Anmeldenummer: 11166574.1
(22) Anmeldetag: 18.05.2011
(51) Int. Cl.: B64F 5/00

(54) **Stringerpositionierung**

(30) Priorität: 18.05.2010 DE 102010029094
(71) Anmelder: EDAG GmbH & Co. KGaA, 36039 Fulda (DE)
(72) Erfinder: Ziegler, Felix, 88048, Friedrichshafen (DE); Schaafhausen, Wilfried, 88045, Friedrichshafen (DE)
(74) Vertreter: Schwabe - Sandmair - Marx

(57) **Zusammenfassung**

Verfahren zum Verstärken einer Flächenstruktur 7, vorzugsweise einer Schalenstruktur, mit einem lang gestreckten, schlanken Stringer 1, bei dem der Stringer 1 an einer ersten Greifstelle mittels eines ersten Greifers 5 und an einer von der ersten Greifstelle axial beabstandeten zweiten Greifstelle mittels eines zweiten Greifers 6 gehalten wird, der Stringer 1 mit dem ersten Greifer 5 an oder nahe bei der ersten Greifstelle an der Flächenstruktur 7 positioniert und fixiert wird, während der zweite Greifer 6 den Stringer 1 an der zweiten Greifstelle relativ zu der Flächenstruktur 7 in definierter Position hält, und ein Fügewerkzeug 4 längs des Stringers 1 in eine von der Fixierstelle auf die zweite Greifstelle zu weisende Fügerichtung X bewegt wird und den Stringer 1 dabei in Fügerichtung X fortschreitend an die Flächenstruktur 7 drückt und mit dieser fügt. Eine Vorrichtung zum Fügen eines Stringers 1 mit einer Flächenstruktur 7 und einem Greif- und Fügewerkzeug zum Greifen eines ersten Bauteils und Fügen mit einem zweiten Bauteil, vorzugsweise zur Verwendung in dem Verfahren.

## Beschreibung

Die Erfindung betrifft ein Verfahren mit dem ein Stringer zur Verstärkung auf einer bevorzugt großflächigen Flächenstruktur, beispielsweise einem Rumpfabschnitt der Außenhülle eines Flugzeugs, aufgelegt und anschließend mit der Flächenstruktur verbunden, beispielsweise verklebt werden kann. Die Erfindung betrifft auch eine Vorrichtung zum Aufbringen eines Stringers auf einer solchen Flächenstruktur, mit zwei Greifern, mit Hilfe derer der Stringer gegriffen, relativ zu der Flächenstruktur fixiert und anschließend mit der Flächenstruktur verbunden werden kann, sowie ein Greif- und Fügewerkzeug zum Greifen eines ersten Bauteils und dem Fügen des ersten Bauteils mit einem zweiten Bauteil.

Im Stand der Technik ist es bekannt die Biegesteifigkeit von Flächenstrukturen aus Kunststoff oder Faserverbundstoffen, wie sie beispielsweise im Flugzeugbau Anwendung finden, durch das Aufbringen von Verstärkungsprofilen zu erhöhen. Diese Verstärkungsprofile oder Stringer werden in einem Werkzeug, in dem der Flächenstruktur ihre Form gegeben wird, auf die Flächenstruktur aufgeklebt oder anderweitig mit der Flächenstruktur verbunden, um die Form der Flächenstruktur auch beim Herausnehmen aus dem Werkzeug zu erhalten.

Aus der US 7,530,530 B2 ist es beispielsweise bekannt, dass Verstärkungsprofile auf eine Flächenstruktur aufgebracht werden um die Festigkeit der Flächenstruktur bzw. deren Biegesteifigkeit zu erhöhen. Das Verstärkungsprofil wird dazu auf einem kollabierbaren Mantelrohr, das mit der Innenform des Mantelrohrs angepassten Materialstreifen gefüllt ist, auf der Flächenstruktur platziert. Dabei kann das Mantelrohr im Vorlauf als Form dienen, auf der das Verstärkungsprofil geformt wird. Ist das Verstärkungsprofil mit dem Mantelrohr und den Streifen auf der Flächenstruktur positioniert, wird mit einem Werkzeug Druck auf das Verstärkungsprofil ausgeübt, um es fest mit der Flächenstruktur zu verbinden. Anschließend werden die Streifen aus dem Mantelrohr entfernt, das Mantelrohr zum Beispiel durch das Anlegen von Unterdruck oder Vakuum kollabiert und ebenfalls aus dem Verstärkungsprofil entfernt. Dieses Verfahren ist zeitlich sehr aufwändig, und erfordert zusätzlich zur Herstellung des Verstärkungsprofils die Bereitstellung des Mantelrohrs und der der Innenform des Mantelrohrs angepassten Streifen. Jedes Mantelrohr, wenn es denn wiederverwendbar ist, kann nur identische Verstärkungsprofile platzieren, bereits bei kleinen Abweichungen muss das Mantelrohr und eventuell die Form der Streifen geändert werden.

Es ist eine Aufgabe der Erfindung eine Vorrichtung, ein Werkzeug und ein Verfahren zur Verfügung zu stellen, um einfach und kostengünstig einen Stringer mit einer Flächenstruktur zu verbinden.

Gelöst wird diese Aufgabe mit einem Verfahren gemäß Anspruch 1, einer Vorrichtung nach Anspruch 9 und einem Werkzeug nach Anspruch 12.

Um das Verfahren anwenden zu können, kann die Flächenstruktur auf einem Gestell oder einem Unterbau, zum Beispiel dem Unterbau oder der unteren Hälfte eines Formwerkzeugs, abgelegt werden. So kann der Flächenstruktur die Form gegeben werden, die die verstärkte Flächenstruktur nach dem Aufbringen des Stringers haben und beibehalten soll. Als Stringer werden im Allgemeinen lang gestreckte, schlanke Verstärkungsprofile bezeichnet, die zur Verstärkung von bevorzugt großflächigen Flächenprofilen dienen, wobei die Stringer und die Flächenprofile aus Kunststoff, faserverstärktem Kunststoff, Naturfasern, Pappe oder Papier, Textil, Leichtmetall oder anderen geeigneten Materialien bestehen können. Pappe, Papier, Textilien und Naturfasern können dabei zum Beispiel mit Harz oder Lack getränkt oder beschichtet sein. Das Flächenprofil kann auch aus einem mehrschichtigen Verbundstoff bestehen, beispielsweise einer Platte oder Folie als Trägermaterial, mit einer ein- oder beidseitigen Beschichtung.

Die Flächenstruktur kann aus einem labilen Material bestehen, das alleine aufgrund der Schwerkraft sich der Kontur des Gestells oder des Unterbaus anpasst. Die Anpassung an die Form kann dadurch unterstützt werden, dass die zu dem Gestell bzw. Unterbau weisende Oberfläche der Flächenstruktur zusätzlich zum Beispiel durch Vakuum angesaugt wird, um zu garantieren, dass die Flächenstruktur allen Konturen des Gestells oder Unterbaus exakt folgt. Alternativ kann die Flächenstruktur auf eine Matrix von Saugköpfen aufgelegt werden, die die Flächenstruktur ansaugen und vor oder nach dem Ansaugen einzeln gesteuert verstellt werden können, um der Flächenstruktur eine gewünschte Form zu geben. Solch ein Formwerkzeug hat den großen Vorteil, dass es zur Produktion unterschiedlicher Teile verwendet werden kann, da es bei kleinen oder großen Änderungen der Kontur das Werkzeug durch entsprechende Umprogrammierung an die neuen Anforderungen angepasst werden kann.

Auch Teile unterschiedlicher Endprodukte mit total unterschiedlichen Formen können so in einem programmierbaren Werkzeug hergestellt werden, ohne dass für jedes neue Teil oder jede geänderte Teileform die Kosten für die Anpassung oder die Neuerstellung für Werkzeuge anfallen.

Bevorzugt ist die Flächenstruktur bereits vorgeformt und die Verstärkungsprofile haben die Aufgabe die vorgeformte Flächenstruktur zu verstärken, zum Beispiel eine Veränderung der Form durch Druck von außen oder durch eine signifikante Druckdifferenz zwischen Innendruck einer Kabine und Außendruck der Umgebung zu verhindern.

Das Verfahren zum Verstärken einer Flächenstruktur mit einem Stringer umfasst die folgenden Schritte:
Zunächst wird der bevorzugt lang gestreckte, schlanke Stringer, der beispielsweise in einem Magazin zur Verfügung gestellt werden kann, an einer ersten Greifstelle mittels eines ersten Greifers und an einer von der ersten Greifstelle axial beabstandeten zweiten Greifstelle mittels eines zweiten Greifers gehalten. Dann wird der Stringer mit dem ersten Greifer an oder nahe der ersten Greifstelle an oder auf der Flächenstruktur positioniert und dort fixiert. Der zweite Greifer hält den Stringer an der zweiten Greifstelle relativ zu der Flächenstruktur in einer definierten Position fest. Schließlich wird ein Fügewerkzeug längs des Stringers in eine Fügerichtung, die von der Fixierstelle, das heißt, von der Stelle an der der erste Greifer den Stringer an der Flächenstruktur fixiert, auf die zweite Greifstelle zu bewegt, und der Stringer wird dabei in die Fügerichtung fortschreitend an die Flächenstruktur gedrückt und mit dieser gefügt.

Das Wort positionieren bedeutet hier, dass der Stringer im Bereich der ersten Griffstelle auf der Flächenstruktur in oder auf einen vorherbestimmten Bereich abgelegt wird, wobei dieser Bereich vorgegeben ist. Der Stringer kann an beliebiger vorgegebener Stelle auf der Flächenstruktur positioniert werden. Reicht der Stringer von einer Kante der Flächenstruktur bis zu einer gegenüberliegenden Kante, müssen die Enden des Stringers nicht exakt mit der Kante der Flächenstruktur abschließen, aber bevorzugt nicht nach außen über die Kante vorstehen.

Bevorzugt handelt es sich bei dem ersten Greifer um ein kombiniertes Greif- und Fügewerkzeug. Dabei wird der Stringer mit dem ersten Greifer auf der Flächenstruktur positioniert. Nach der Positionierung wird der Stringer zunächst im Bereich des Werkzeuges mit der Flächenstruktur gefügt, so dass eine feste Verbindung zwischen dem Stringer und der Flächenstruktur in diesem Bereich entsteht, der Stringer in diesem Bereich relativ zur Flächenstruktur nicht mehr bewegt werden kann. Dieses erste Fügen an oder nahe der ersten Greifstelle könnte man auch als Heften bezeichnen. Nach dem Heften wird der Haltgriff, mit dem das Werkzeug den Stringer zum Ablegen auf der Flächenstruktur hält, gelöst. Das kombinierte Werkzeug, bestehend aus dem Fügewerkzeug und dem Greif- und Halteelement für den Stringer während des Transports auf die Flächenstruktur, wird dann zum Fügen des Stringers mit der Flächenstruktur entlang dem Stringer geführt.

Alternativ kann der Stringer durch einen ersten Greifer gegriffen und auf der Flächenstruktur positioniert werden, wobei der erste Greifer den Stringer mit der Flächenstruktur vor Beginn des Fügevorgangs verbindet und diese Verbindung durch den ersten Greifer auch während zumindest eines Teils des Fügevorgangs, bevorzugt während des gesamten Fügevorgangs, beibehalten wird. Stringer und Flächenstruktur werden an oder nahe der vom ersten Greifer gehaltenen ersten Greifstelle mittels des ersten Greifers so verbunden, dass sich der Stringer dort nicht mehr relativ zur Flächenstruktur bewegen kann. Der erste Greifer kann zum Fixieren des Verstärkungsprofils relativ zur Flächenstruktur zusätzlich noch mit einem Unterbau einer Vorrichtung auf der die Flächenstruktur während des Fügens abgelegt ist, verbindbar sein, zum Beispiel durch einen Schnapp- oder Rastverbindung, eine kraftschlüssige Verbindung, beispielsweise mittels Elektromagnet, oder eine formschlüssige Verbindung, so dass zusätzlich sichergestellt werden kann, dass das Verstärkungsprofil im Bereich oder nahe der ersten Greifstelle exakt auf der Flächenstruktur positioniert ist.

Allerdings ist es nicht unbedingt notwendig, dass die Flächenstruktur zum Fügen auf einem Unterbau abgelegt wird, die Fügestruktur kann auch gehalten von einem oder mehreren Aktoren mit dem Stringer gefügt werden.

Zusammen mit dem ersten Greifer kann vom gleichen Aktor ein Fügewerkzeug zum Fügen des Stringers mit der Flächenstruktur mitgeführt werden. In diesem Fall sind der erste Greifer und das Fügewerkzeug zwar am gleichen Aktor befestigt, weisen aber keine oder eine trennbare Verbindung miteinander auf. Hat der erste Greifer den Stringer fest auf der Flächenstruktur positioniert, kann das Fügewerkzeug ohne den ersten Greifer zum Fügen von dem ersten Aktor entlang des Stringers geführt werden, nachdem der Aktor die Verbindung mit dem ersten Greifer gelöst hat. Dazu kann der Greifer ein Signal einer Steuerung erhalten, die die Verbindung zwischen dem ersten Greifer und dem Aktor erst dann löst, wenn der Steuerung durch entsprechende Signale mitgeteilt wird, dass der erste Greifer seine Halteposition eingenommen hat. Gleichzeitig kann die Steuerung den Aktor mit dem Fügewerkzeug den Befehl geben, mit dem Fügen zu beginnen.

Der zweite Greifer in seiner definierten Position kann den Stringer an der zweiten Greifstelle in einem Anstand von der Flächenstruktur halten und den Abstand in Abhängigkeit vom Fortschritt des Fügens verringern. Ein in Fügerichtung vor dem Fügewerkzeug befindlicher Längenbereich des Stringers wird dadurch bei in Fügerichtung fortschreitendem Fügewerkzeug an die Flächenstruktur angelegt und kann mit dieser gefügt werden. Mit anderen Worten, der zweite Greifer kann den Stringer an der zweiten Greifstelle im freien Raum über der Flächenstruktur halten und den Stringer immer weiter auf die Flächenstruktur absenken, je mehr sich das Fügewerkzeug der zweiten Greifstelle nähert. Kurz bevor das Fügewerkzeug auf den zweiten Greifer aufläuft, kann dieser den Stringer freigeben, so dass der Stringer über die zweite Greifstelle hinaus bis zum Ende gefügt werde kann.

Der Stringer kann eine Länge von bis zu 30m aufweisen, typischer Weise ist er zwischen 16m und 20m lang. In Längsrichtung gesehen ist eine seitliche Abweichung der Soll-Position des Stringers auf der Flächenstruktur von seiner Ist-Position über die gesamte Länge von 0,1 mm bis 0,5mm, bevorzugt nicht größer als 0,2mm, tolerierbar. Um diese Werte zu erreichen, ist es vorteilhaft, wenn der Stringer erst während des Fügens mit der zweiten Greifstelle nach und nach auf die Flächenstruktur gesenkt wird und mit dem zweiten Greifer der Stringer zu Korrektur seiner Position auf der Flächenstruktur zusätzlich quer zur Längsrichtung des Stringers, der Fügerichtung, bewegt werden kann.

Der Stringer kann beliebige Formen haben, allerdings ist es vorteilhaft, wenn es eine flächige Unterseite aufweist, die parallel zur Oberfläche der Flächenstruktur verläuft und mit der der Stringer auf der Flächenstruktur befestigt werden kann. Auf diesem kontaktierende Flächenbereich des Stringers oder auf der Flächenstruktur kann ein Verbindungsmaterial oder eine Verbindungsmaterialschicht, zum Beispiel ein Klebstoff oder eine Klebeschicht, aufgebracht sein, das bzw. die bei Raumtemperatur eine lösbare oder unlösbare Haftung des Stringers auf der Flächenstruktur bewirkt. Das Verbindungsmaterial kann zum Fügen durch Druck und/oder Aktivierung, zum Beispiel Wärmezufuhr, Induktion, Strahlung, zum Beispiel IR-Strahlung, oder andere Aktivierungsmaßnahmen aktiviert werden. Die Flächenstruktur und/oder der kontaktierende Flächenbereich des Stringers können auch Verbindungsmaterialkomponenten aufweisen oder aus einem Material bestehen, welches durch eine der Maßnahmen aktiviert werden kann, und dadurch ohne zusätzliches Verbindungsmaterial und ohne eine zusätzliche Verbindungsmaterialschicht ein Fügen des Stringers mit der Flächenstruktur ermöglicht.

Das Fügewerkzeug ist an die Form des jeweiligen Verstärkungsprofils angepasst oder anpassbar und kann wenigstens einen Andrückkörper, zum Beispiel eine Andrückrolle oder einen Andrückgleitschuh, und/oder wenigstens eine Aktivierungseinrichtung aufweisen. Der wenigstens eine Andrückkörper kann in Laufrichtung des Fügewerkzeugs bzw. die Fügerichtung vor oder hinter der Aktivierungseinrichtung angeordnet sein, es kann aber auch je ein Andrückkörper vor und hinter der Aktivierungseinrichtung angeordnet sein. Das Fügewerkzeug kann auch zwei oder mehr Andrückkörper und/oder Aktivierungseinrichtungen nebeneinander quer zur Längsrichtung des Verstärkungsprofils aufweisen. Auch in die Fügerichtung gesehen können hintereinander mehrere Andrückkörper und/oder Aktivierungseinrichtungen angeordnet sein, wobei es sich zumindest bei den Aktivierungseinrichtungen um unterschiedliche Aktivierungseinrichtungen handeln kann, zum Beispiel zum Aktivieren unterschiedlicher Verbindungsmaterialien.

Der Andrückkörper kann auch selbst die Aktivierungseinrichtung mit bilden, zum Beispiel kann der Andrückkörper mit Wärme, Strahlung oder andere Aktivierungsmaßnahmen auf den Stringer und/oder die Flächenstruktur zur Aktivierung des Verbindungsmaterials einwirken.

Die Greifer und/oder das Fügewerkzeug können von gesteuert oder geregelt automatisch bewegbaren Aktoren, vorzugsweise Roboterarmen von beispielsweise Industrierobotern, bewegt werden. Dabei können der erste Greifer und das Fügewerkzeug gemeinsam von einem im Raum gesteuert oder geregelt automatisch bewegbaren Aktor bewegt werden, und der erste Greifer kann nach dem oder zum Fixieren des Stringers relativ zu der Flächenstruktur von dem Aktor getrennt werden, während das Fügewerkzeug am Aktor verbleibt und von diesem zum Fügen in die Fügerichtung bewegt werden kann.

Das Verbindungsmaterial, das zum Verbinden oder Fügen des Stringers mit der Flächenstruktur dient, kann mit dem Fügewerkzeug in einem einzigen Lauf aktiviert werden und gleichzeitig kann der Stringer bzw. sein die Flächenstruktur kontaktierender Flächenbereich auf die Flächenstruktur gedrückt oder angedrückt werden, wobei sich das Verbindungsmaterial durch das Aktivieren und das Drücken verfestigt. Alternativ kann der Stringer in einem ersten Lauf mit dem Fügewerkzeug bei Raumtemperatur an die Flächenstruktur angedrückt werden, so dass er vorläufig auf der Flächenstruktur haftet. In einem zweiten Lauf kann dann das Verbindungsmaterial mit dem gleichen oder bevorzugt einem anderen Fügewerkzeug ohne Drücken nur aktiviert werden, wobei alleine durch die Zufuhr von Aktivierungsenergie das Verbindungsmaterial die Endfestigkeit der Verbindung zwischen dem Stringer und der Flächenstruktur hergestellt wird.

Die Vorrichtung ist nicht auf den Einsatz von zwei Greifern beschränkt. Je nach der Länge des Stringers kann es vorteilhaft sein, mehr als zwei Greifer einzusetzen, die den Stringer an drei oder mehr Greifstellen greifen. Jeder der Greifer kann von einem eigenen Aktor bewegt werden. Das Fügen kann wie beschrieben in einem oder zwei Schritten mittels eines oder zwei Fügewerkzeugen erfolgen. Alternativ können aber auch mehr Fügewerkzeuge zum Einsatz kommen, so kann beispielsweise bei drei Greifstellen, wobei der erste Greifer zum Beispiel die erste Greifstelle in der Mitte des Stringers greift, je ein Fügewerkzeug zwischen der ersten Greifstelle und der außen liegenden zweiten bzw. dritten Greifstelle zum Einsatz kommen, so dass die Fügezeit reduziert werden kann. Mehrere Fügewerkzeuge können auch dann zum Einsatz kommen, wenn beispielsweise mehrere parallel oder ungefähr parallel zueinander verlaufende Stringer gleichzeitig auf eine Flächenstruktur aufgebracht werden sollen, was insbesondere bei der Produktion größerer Stückzahlen vorteilhaft sein kann. In diesem Fall können die Fügewerkzeuge gemeinsam oder synchron von einem einzigen Aktor, zum Beispiel von einer Laufkatze oder einem Führungsbalken, die über der Flächenstruktur angeordnet sind, in die Fügerichtung bewegt werden, wodurch Aktoren eingespart werden können.

Schließlich kann das Fügewerkzeug wenigstens einen Stellmotor aufweisen, mit dem die Andrückkörper und/oder Aktivierungseinrichtungen zur Anpassung an eine Form eines Verstärkungsprofils quer zur Längsrichtung des Verstärkungsprofils verstellt werden können, wobei die Verstellung kontinuierlich erfolgen kann, zum Beispiel bei einem Stringer dessen Breite sich von einem Ende zur Mitte oder zum anderen Ende hin kontinuierlich oder abschnittsweise verbreitert oder verschmälert. Auch etwaige Produktionstoleranzen der Verstärkungsprofile können damit ausgeglichen werden.

Die Erfindung betrifft weiterhin eine Vorrichtung zum Fügen eines Stringers mit einer Flächenstruktur, mit optional einem Unterbau, auf dem die Flächenstruktur flächig zumindest in dem Bereich abgestützt werden kann, in dem der Stringer aufgebracht wird. Die Vorrichtung weist weiterhin wenigstens zwei Greifer auf, mit denen der Stringer gegriffen und gehalten wird und die den Stringer auf der Flächenstruktur platzieren, wobei eine Steuerung koordiniert die Bewegungen der Greifer steuert. Die Vorrichtung weist weiter ein Fügewerkzeug auf, zum Fügen des Stringers mit der Flächenstruktur und wenigstens einen im Raum automatisch bewegbaren Aktor, der das Fügewerkzeug zum Fügen entlang der Längsachse des Stringers führt.

Das Fügewerkzeug kann einen Andrückkörper, beispielsweise eine Andrückrolle oder einen Gleitschuh aufweisen, die an einem Schlitten montiert sein können und über den Schlitten mit dem Fügewerkzeug verbunden sind. Weiterhin kann das Fügewerkzeug eine Aktivierungseinrichtung aufweisen und der wenigstens eine Andrückkörper kann in Längsrichtung des Stringers gesehen vor oder hinter der Aktivierungseinrichtung angeordnet sein. Bevorzugt ist der Andrückkörper in Fügerichtung hinter der Aktivierungseinrichtung angeordnet. In einer weiteren Alternative kann auch je ein Andruckkörper vor und hinter der Aktivierungseinrichtung angeordnet sein, wobei der Abstand zwischen den jeweiligen Andrückkörpern und der Aktivierungseinrichtung unterschiedlich sein kann, so können die in Fügerichtung vorlaufenden Andrückkörper einen größeren Abstand zur Aktivierungseinrichtung aufweisen als die in Fügerichtung nachlaufenden Andrückkörper, et vice versa. In einer dritten Alternative können der Andrückkörper und die Aktivierungseinrichtung zu einem Fügekörper kombiniert sein, zum Beispiel eine Andrückrolle, die aufheizbar ist.

Der Andrückkörper kann am Fügewerkzeug quer zur Fügerichtung beweglich angeordnet sein. Dazu kann er wenigstens einen Stellmotor aufweisen, der eine Spindel antreibt, mit der der Andrückkörper oder die Andrückkörper und/oder die Aktivierungseinrichtung bzw. die Aktivierungseinrichtungen quer zur Längsrichtung des Stringers verstellt werden können. Mit dem Motor kann der Abstand der Andrückkörper zueinander vor Beginn des Fügens eingestellt und während des Fügens verstellt werden, wodurch das Fügewerkzeug an Stringer unterschiedlicher Breite angepasst werden kann.

Die Kraft, mit der die Andrückkörper gegen den Stringerkörper drücken, kann zum Ausgleich von Fertigungstoleranzen mittels eines Sensors überwacht werden, um automatisch den Abstand der Andrückkörper zueinander verändern zu können, wenn die Kraft einen vorgegebenen Grenzwert über- oder unterschreitet. Zusätzlich kann auch die Andrückkraft des Andrückkörpers durch einen weiteren Verstellmotor eingestellt werden, falls mit dem Fügewerkzeug Materialien miteinander gefügt werden, die mit unterschiedlichen Drücken gefügt werden müssen.

Die exakte Ausrichtung der Stringer kann weiterhin dadurch verbessert werden, dass der oder die Andrückkörper in einem Profilradius laufen, der am Übergang zwischen dem von der Flächenstruktur abstehenden Stringerprofil und dem kontaktierenden Flächenbereich des Stringers, dem Stringerflansch, gebildet ist. Dabei können die Andrückkörper auch durch Andrückkörperpaare ersetzt werden, mit je einem Andrückkörper, der in einem Winkel von zum Beispiel 10° bis 80°, bevorzugt 30° bis 60°, noch bevorzugter 45° in dem Profilradius läuft und einer daneben angeordneten, mit parallel zur Flächenstrukturoberfläche ausgerichteten Drückfläche versehenen Andrückkörpern zum Andrücken des Stringers.

Es ist auch möglich, dass der Stringerflansch in regelmäßigen Abständen oder an besonders kritischen Bereichen des Endprodukts, nach außen weisende Verbreiterungen aufweist, die als Verbindungspads bezeichnet werden können. Der Stringer kann in diesem Fall nur über die Verbindungspads mit der Flächenstruktur gefügt, zum Beispiel verklebt sein, oder die Verbindungspads und die Stringerflansche werden beide mit der Flächenstruktur gefügt. Werden nur die Verbindungspads mit der Flächenstruktur gefügt, können die im Profilradius geführten Andrückkörper als reine Führungselemente ausgebildet sein, wird dagegen der Flansch und die Pads mit der Flächenstruktur gefügt, müssen diese Andrückkörper sowohl führen als auch drücken.

Schließlich betrifft die Erfindung auch ein Greif- und Fügewerkzeug zum Greifen eines ersten Bauteils und zum Fügen des ersten Bauteils mit einem zweiten Bauteil, wie es zum Beispiel in dem beschrieben Verfahren erfolgt. Das Greif- und Fügewerkzeug umfasst einen Dockingport zum automatischen Andocken an einen und Abdocken von einem im Raum automatisch bewegbaren Aktor, einen mit dem Dockingport verbundenen Greifer zum Greifen des ersten Bauteils, vorzugsweise des vorbeschriebenen Stringers, einen mit dem Dockingport verbundenen Andrückkörper, vorzugsweise einer Andrückrolle, zum Andrücken des ersten Bauteils an das zweite Bauteil, vorzugsweise die vorbeschriebene Flächenstruktur, und eine mit dem Dockingport verbundene Aktivierungseinrichtung zum Aktivieren eines Verbindungsmaterials zum Verbinden des ersten und/oder zweiten Bauteils im Bereich oder in unmittelbarer Nähe des Andrückkörpers. Wie bereits beschrieben, können der Andrückkörper und die Aktivierungseinrichtung auch zu einem Fügekörper zusammengefasst sein.

Der Greifer kann lösbar mit dem Dockingport verbunden sein und kann mittels eines über den Dockingport leitbaren Steuersignals von diesem automatisch abgedockt werden. Bevorzugt ist der Greifer dafür ausgebildet das erste Bauteil und das zweite Bauteil im Eingriff nur mit dem ersten und dem zweiten Bauteil aneinander zu halten. Optional kann der Greifer zusätzlich noch mit dem optionalen Unterbau eine Verbindung eingehen, beispielsweise dort einrasten.

Im Folgenden werden Ausführungsformen der Vorrichtung anhand von Figuren erläutert. Die Erfindung ist aber nicht auf die in den Figuren gezeigten Ausführungen beschränkt, sondern umfasst auch andere Ausführungsformen, die unter die Ansprüche fallen und in der Beschreibung Erwähnung finden. Merkmale, die nur den Figuren zu entnehmen sind, gehören ebenfalls zum Offenbarungsumfang der Erfindung.

Die Figuren zeigen im Einzelnen:
- Figur 1: Greifen eines Verstärkungsprofils an beiden längsseitigen Enden mit je einem Greifwerkzeug
- Figur 2: Aktor mit erstem Greifer und Fügewerkzeug nach dem Ablegen und Fixieren des Verstärkungsprofils
- Figur 3: Greifer befestigt am Unterbau nach der Trennung vom Aktor
- Figur 4: Andrückrollen, die mit Federkraft quer zur Fügerichtung, verstellbar sind
- Figur 5: Fügewerkzeug in einer Frontalansicht
- Figur 6: Fügewerkzeug mit Aktivierungseinrichtung in einer perspektivischen Ansicht
- Figur 7: Fügewerkzeug von oben
- Figur 8: Fügewerkzeug mit Aktivierungseinrichtung in einer Seitenansicht

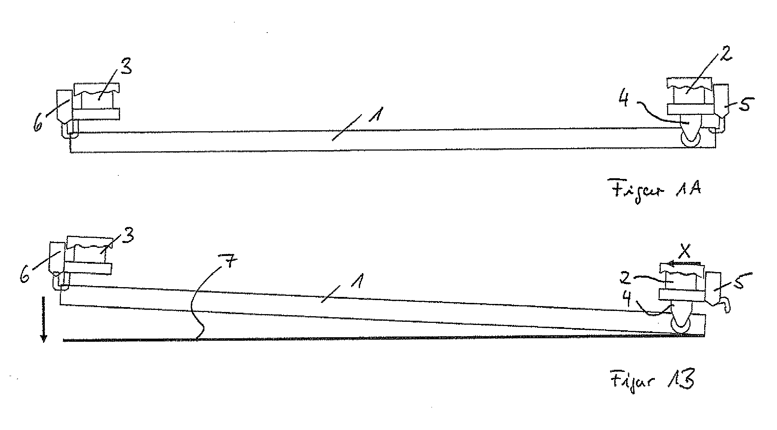

In der Figur 1A wird das Greifen eines Stringer 1 mit einem ersten Aktor 2 und einem zweiten Aktor 3 gezeigt. Der erste Aktor 2 trägt ein Werkzeug, dass ein Fügewerkzeug 4 und einen ersten Greifer 5 aufweist, die gemeinsam von dem Aktor 2 bewegt werden können. Der erste Greifer 5 kann den Stringer 1 an einer ersten Greifstelle greifen. Der zweite Aktor 3 trägt einen zweiten Greifer 6, mit dem der Stringer 1 an einer von der ersten Greifstelle axial beabstandeten zweiten Greifstelle gegriffen werden kann. Je nach der tatsächlichen Länge des Stringers 1 können mehr als zwei Aktoren 2, 3 eingesetzt werden, um den Stringer 1 aus zum Beispiel einem Magazin auf die Flächenstruktur 7 zu heben, wobei diese Aktoren mit weiteren Greifern ausgerüstet sein können, die den Stringer 1 beim Transport vom Magazin auf die Flächenstruktur 7 annähernd gerade halten und so vor Schäden durch zum Beispiel Abknicken schützen können.

Die Flächenstruktur 7 kann optional auf einem Unterbau 8 abgelegt werden, der beim späteren Fügeprozess gewährleistet, dass die Flächenstruktur 7 wenigstens in dem Bereich, in dem die Flächenstruktur 7 mit einem Stringer 1 gefügt wird, nicht durch den Fügeprozess verformt werden kann.

Die Figur 1B zeigt den Moment, wo der Stringer 1 mit dem Ende das vom ersten Aktor 2 gehalten wird auf der Flächenstruktur 7 abgelegt wurde und das Fügewerkzeug 4 beginnt, sich in die Richtung des Pfeiles, die Fügerichtung X zu bewegen, um den Stringer 1 mit der Flächenstruktur 7 zu verbinden. Es ist angedeutet, dass zu diesem Zeitpunkt der Greifer 5 seine Position geändert hat, das heißt, den Stringer 1 nicht länger tragend hält, sondern zusammen mit dem Fügewerkzeug entlang dem Stringer 1 in die Fügerichtung X bewegt werden kann.

Die vom zweiten Aktor 3 gehaltene zweite Greifstelle des Verstärkungsprofils 1, bleibt mit dem Greifer 6 verbunden und wird erst sukzessive auf die Flächenstruktur 7 abgesenkt, während das Fügewerkzeug 4 von seiner in der Figur 1B gezeigten Position auf das gegenüberliegende Ende des Stringers 1 zu bewegt wird. Dadurch, dass der zweite Aktor 3 das von ihm gehaltene Ende des Stringers 1 quasi noch in der Luft hält, kann die Lage des Stringers 1 während des Fügens noch korrigiert werden, indem der zweite Aktor 6 das von ihm gehaltene Ende des Stringers 1 quer zu dessen Längsrichtung bewegt.

In der Figur 1B ist die Flächenstruktur 7 als plane Fläche dargestellt. Wie bereits in der Beschreibung erläutert, handelt es sich bei der Flächenstruktur 7 um eine flexible Flächenstruktur, das heißt eine Flächenstruktur 7 aus einem Material welches seine Form zum Beispiel unter dem Einfluss der Schwerkraft alleine oder unterstützt durch beispielsweise ein Vakuum oder Druck einer Form in der sie abgelegt wird, anpassen kann. Die Flächenstruktur 7 kann vor dem Fügen mit dem Stringer 1 aber auch bereits in die Endform geformt sein und der oder die Stringer 1 werden in die vorgeformte Flächenstruktur 7 als reine Verstärkungselemente eingelegt und mit der Flächenstruktur 7 gefügt. Das Material kann Kunststoff, Pappe, Papier, Naturfaser, ein Textil, Leichtmetall, Leichtmetallfolie oder ein Verbundstoff sein, wie sie heute üblicherweise bei Schalenteilen in Leichtbauweise zum Einsatz kommen. Bei den Schalenteilen kann es sich zum Beispiel um Teile eines Flugzeugrumpfs, eines Flügels, einer Raketentanks oder eines Lastkraftwagenaufbaus handeln.

Die Flächenstruktur 7 kann aber auch eine Festigkeit aufweisen, die es erlaubt, dass der Stringer 1 mit der Flächenstruktur 7 gefügt wird, wenn diese nicht auf einem Unterbau 8 aufliegt, sondern beispielsweise durch weitere Aktoren während des Fügens gehalten wird.

Auch der Stringer 1 kann aus einem der vorgenannten Materialien bestehen oder solche Materialien aufweisen, es kann sich aber auch um eine Profil aus Leichtmetall, beispielsweise Aluminium oder einer Legierung auf Aluminiunibasis oder Magnesiumbasis oder anderen geeigneten Metallen oder Metalllegierungen handeln. Grundsätzlich wird der Fachmann das geeignete Material aufgrund der Anforderungen an Gewicht und Stabilität des Endprodukts aus der großen Palette der möglichen Materialien auswählen.

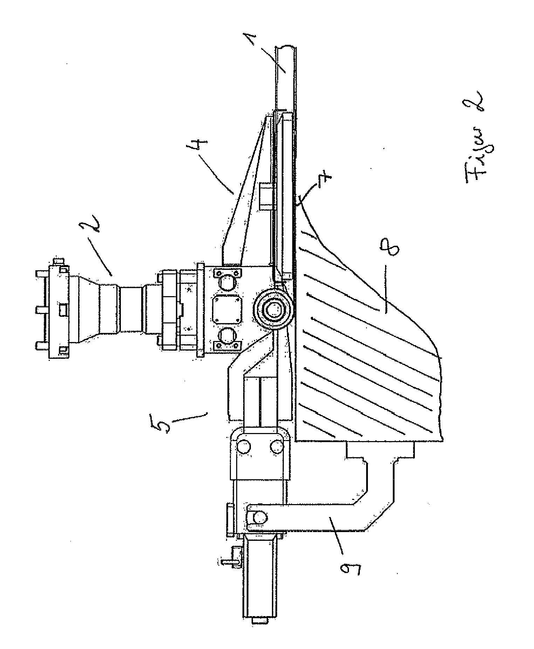

Die Figur 2 zeigt in einer Seitenansicht die Situation, in der der erste Aktor 2 den Stringer 1, den Greifer 5 und das Fügewerkzeug 4 auf der Flächenstruktur 7, die auf einem Unterbau 8 liegt, abgelegt hat. Der Greifer 5 kann dabei am Unterbau 8 anliegen oder sich an diesem abstützen oder über ein Verbindungsteil 9 mit dem Unterbau 8 verbunden sein, zum Beispiel in eine Halterung eingerastet oder formschlüssig in einer entsprechenden Ausnehmung gehalten oder kraftschlüssig zum Beispiel mittels eines Magneten arretiert. Der Greifer 5 selbst hält weiterhin das eine Ende des Stringers 1, so dass jetzt der Stringer 1 relativ zu der Flächenstruktur 7 fixiert ist, das heißt, eine im Wesentlichen ortsfeste Position einnimmt. Gleichzeitig wurde, was in der Figur 2 nicht gezeigt ist, eine bis zum Festlegen der Stringers 1 auf der Flächenstruktur 7 bestehende Verbindung zwischen dem Aktor 2 und dem Greifer 5 gelöst, so dass der Aktor 2 mit dem verbleibenden Fügewerkzeug 4 sich jetzt entlang dem Stringer 1 in Fügerichtung, das heißt, weg vom Greifer 5 bewegen kann.

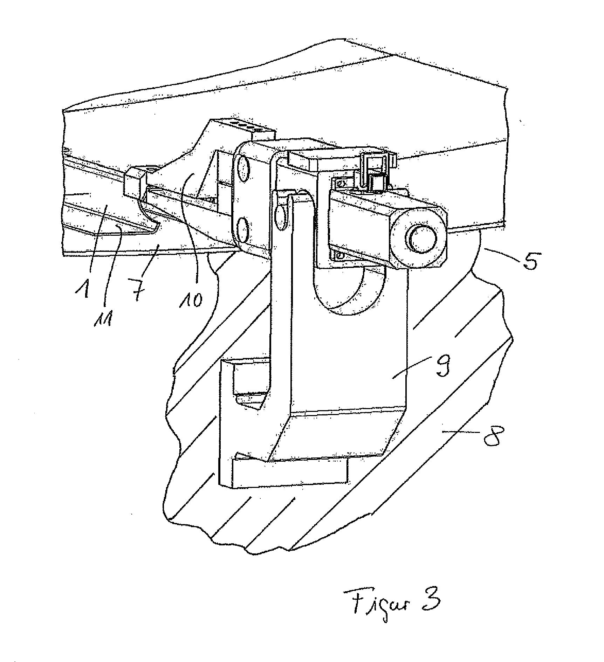

Die Figur 3 zeigt den Greifer 5 in seiner Verwendung als Fixierwerkzeug für den Stringer 1. Mit dem Verbindungsteil 9 ist der Greifer 5 mit dem Unterbau 8 verbunden bzw. stützt sich zumindest am Unterbau 8 ab, während der Greifarm 10 des Greifers 5 das eine Ende des Stringers 1 hält und somit relativ zu der Flächenstruktur 7 fixiert. Wie man sehen kann weist der Stringer 1 eine Trapezform auf, mit zu beiden Seiten abstehenden Flanschen 11, die plan auf der Oberfläche der Flächenstruktur 7 aufliegen. Die Flansche 11 können Bereiche größerer Breite aufweisen, die im Folgenden als Verbindungspads 12 bezeichnet werden und Bereiche geringerer Breite, die als Flansche 11 bezeichnet werden.

Die Verbindungspads 12 und die Flansche 11 können an ihrer der Oberseite der Flächenstruktur 7 zu gewandten Seite eine Verbindungsmaterialschicht, ein Verbindungsmaterial oder einen Verbindungsstoff, zum Beispiel eine Klebeschicht oder einen Klebstoff, aufweisen, die bzw. der die Verbindung zwischen der Flächenstruktur 7 und dem Stringer 1 herstellt. Dieses Verbindungsmaterial kann so ausgelegt sein, dass bereits bei Raumtemperatur eine geringe Haftung des Stringers 1 auf der Flächenstruktur 7 gewährleistet ist, der Stringer 1 zur Feinjustierung aber noch quer zur Längsachse des Stringers 1 bewegt werden kann. Zum Beispiel können die Flansche 11 diese vorläufige Verbindung bewirken, während die endgültige, feste Verbindung zwischen der Flächenstruktur und dem Stringer 1 über die Verbindungspads 12 hergestellt wird. Alternativ kann das Verbindungsmaterial, das bereits bei Raumtemperatur einen provisorischen Halt gibt, auch auf der Flächenstruktur 7 im Bereich der Verbindung mit dem Stringer 1 aufgetragen sein, oder das Verbindungsmaterial kann insgesamt flächenstrukturseitig vorhanden sein. Schließlich kann es auch eine Alternative sein, den Stringer 1 und/oder die Flächenstruktur 7 nur mit dem Verbindungsmaterial für die provisorische Haftung zu versehen und/oder während des Fügens ein weiteres Verbindungsmaterial unter den Stringer 1 zu spritzen oder auf die Flächenstruktur 7 aufzutragen, beispielsweise durch eine Walze oder einen Sprühapparat oder als eine Art Folie, die zwischen den Stringer 1 und die Flächenstruktur 7 eingelegt wird.

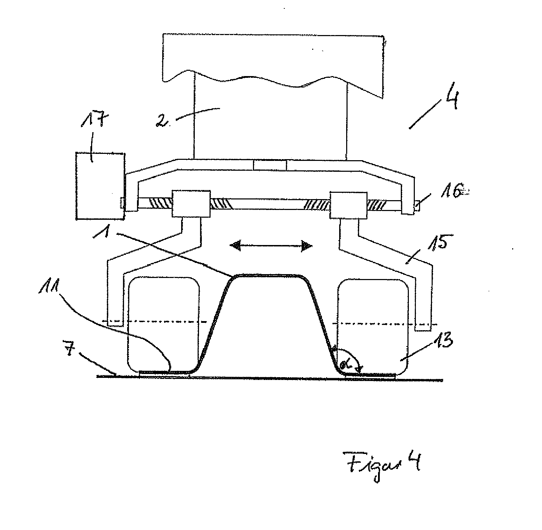

In der Figur 4 ist ein Paar von Andrückkörpern 13 gezeigt, die gemeinsam auf einer Achse, einem Stellglied 16, in einer Richtung quer zur Fügerichtung X bewegbar sind. Dazu weist das Fügewerkzeug 4 einen Motor 17 auf, der das Stellglied 16 drehen kann. Die Andrückkörper 13 sitzen auf Achsabschnitten mit gegenläufigen Gewinden, so dass sich die Andrückkörper 13 bei einer Drehung des Stellglieds 16 aufeinander zu oder voneinander weg bewegen.

Die Andrückkörper 13 sind als Andrückrollen 13 ausgebildet. Die Andrückrollen 13 haben an der Seite, mit der sie am Stringer 1 entlang laufen einen Radius, der dem Radius α des Stringers 1 am Übergang zwischen den Flanschen 11 und dem von der Flächenstruktur 7 abstehenden Stringerkörper entspricht. Dadurch kann die Position des Stringers 1 auf der Flächenstruktur 7 noch während des Fügens korrigiert werden, indem die Andrückrollen 13 den Stringer 1 beim Andrücken noch quer zur Fügerichtung X verrücken können. Der Stringer 1 kann ebenso zuverlässig, eventuell sogar noch zuverlässiger, relativ zur Flächenstruktur 7 beim Fügen ausgerichtet werden, wenn die nicht auf die Flächenstruktur 7 drückende Andrückrolle 13 statt im Radius α auf der von der Flächenstruktur 7 nach oben ragenden schrägen Seitenfläche des Stringers 1 abrollt. Das heißt, dass die Kante der Andrückrolle 13 nicht im Radius α läuft, sondern die schräge Fläche des Stringers 1 als Abrollfläche für die Andrückrolle 13 dient. Der Stringer 1 kann so leichter - wegen der größeren Hebelwirkung der Andrückrolle 13 zur Flanschauflagefläche auf der Flächenstruktur 7 - noch während des Fügens ausgerichtet werden.

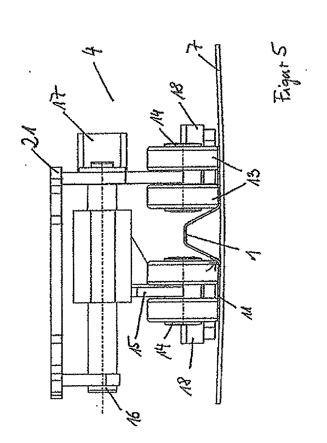

Figur 5 zeigt eine Frontalansicht des Fügewerkzeugs 4. In der gezeigten Ausführung weist das Fügewerkzeug 4 zwei Paare von Andrückkörpern 13, hier Andrückrollen 13, auf mit je einer gemeinsamen Achse 14. Die beiden Andrückrollen 13 sind auf der Achse 14 drehbar aber axial unbeweglich gelagert, so dass sich der Abstand der Andrückrollen 13 zueinander nicht verändern lässt. Eine der beiden Achsen 14 ist über ein Verbindungselement 15 mit dem Stellglied 16 verbunden. Das Stellglied 16 wird von einem Motor 17 angetrieben und kann über das Verbindungselement 15 den Abstand der beiden Andrückrollenpaare 13 zueinander verändern. Im Beispiel ist das Andrückrollenpaar 13, welches auf der Motorseite des Fügewerkzeugs 4 liegt, fest mit einem Rahmen des Fügewerkzeugs 4 verbunden, während das andere Andrückrollenpaar 13 quer zur Fügerichtung X bewegt werden kann. Dadurch kann die Geometrie des Fügewerkzeugs 4 an unterschiedlich geformte Verstärkungsprofile 1 einfach angepasst werden. Das Fügewerkzeug 4 der Figur 5 wird eingesetzt, wenn das Verbindungsmaterial allein durch Druck aktiviert werden kann, das heißt eine ausreichend feste Verbindung zwischen der Flächenstruktur 7 und dem Stringer 1 allein durch die Druckwirkung der Andrückrollen 13 möglich ist. Es kann aber auch ein Fügewerkzeug 4 mit Andrückrollen 13 zeigen, die beim Drücken gleichzeitig die Aktivierung des Verbindungsmaterials durch beispielsweise Energiezufuhr an der Drückstelle bewirken.

Statt der gezeigten zwei Andrückrollenpaare können auch drei oder mehr Andrückrollen 13 auf jeder der beiden Seiten angeordnet sein und/oder es können auch auf jeder Seite hintereinander in die Fügerichtung mehrere Andrückrolle 13, Andrückrollenpaare oder andere Andrückrollenarrangements vorhanden sein. Schließlich müssen die Andrückrollen 13 auch nicht in gleicher Anzahl beidseitig des Stringers 1 angeordnet sein. Zum Beispiel könnten Verbindungspads 12 unterschiedlicher Breite auf den beiden Seiten des Stringers 1 es erforderlich machen, dass auf der einen Seite zwei Andrückrollen 13 nebeneinander angeordnet sind, während auf der anderen Seite nur eine oder drei Andrückrollen 13 nebeneinander angeordnet sind.

Statt des gezeigten Verstellmotors 13 kann die Verstellung der Andrückrollen 13 weniger bevorzugt auch, wie im Stand der Technik seit langem bekannt, durch zum Beispiel hydraulische oder pneumatische Verstellvorrichtung erfolgen.

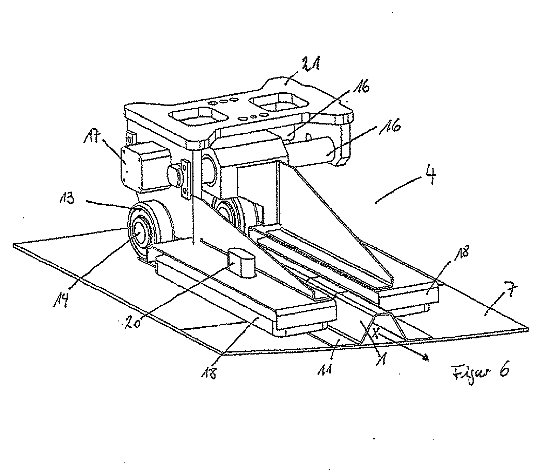

Figur 6 zeigt eine weitere Ausführungsform eines Fügewerkzeugs 4 in einer perspektivischen Ansicht. Wie das Fügewerkzeug 4 der Figur 4 umfasst dieses Fügewerkzeug Andrückrollen 13, hier nur je eine pro Seite, und ein Stellglied 16 mit einem Motor 17 zum Verstellen des seitlichen Abstands der beiden Andrückrollen 13. Weiterhin umfasst das Fügewerkzeug auf jeder Seite je eine Halterung 19, an der je ein Schlitten befestigt ist. Auf dem Schlitten ist eine Aktivierungseinrichtung 18 befestigt ist, deren lichte Höhe über dem Flansch 11 bzw. den Verbindungspads 12 über eine Höhenverstellung 20 eingestellt werden kann. Bei der Aktivierungseinrichtung 18 kann es sich zum Beispiel um eine Keramikstrahlungseinrichtung handeln, mit kurzer Aufheizzeit und konstanter Wärmestrahlungsleistung.

Mittels der Höhenverstellung 20 kann nicht nur der Abstand zwischen der Unterseite der Aktivierungseinrichtung 18 und der von der Flächenstruktur 7 wegweisenden Seite des Steges 11 des Stringers eingestellt werden. Die Höhenverstellung 20 kann auch als kombinierte Höhenverstellungs- und Andrückvorrichtung ausgebildet sein, mittels derer die Aktivierungseinrichtung mit einer einstellbaren Drückkraft auf den Steg 11 oder den Verbindungspad 12 gedrückt werden kann. Dies ist insbesondere dann vorteilhaft, wenn mittels der Aktivierungseinrichtung 18 gleichzeitig Aktivierungsenergie und Aktivierungsdruck zum Fügen des Stringers 1 mit der Flächenstruktur übertragen wird. Solch eine kombinierte Vorrichtung kann beispielsweise mit einer Andrückrolle 13, wie zur Figur 4 beschrieben, zusammen das Fügewerkzeug bilden, wobei die Andrückrolle 13 an der Seitenfläche des Stringers 1 läuft, um den Stringer 1 genau auf der Flächenstruktur 7 zu positionieren.

Auch hier sind wieder andere Ausführungen des Fügewerkzeugs 4 denkbar, zum Beispiel können die Andrückrollen 13 in der Fügerichtung X vor oder hinter oder vor und hinter der Aktivierungseinrichtung angeordnet sein. Für die Anzahl der in Fügerichtung X hintereinander oder quer zur Fügerichtung X angeordneten Andrückrollen 13 gilt das zur Figur 5 Gesagte entsprechend.

Von Vorteil kann es sein, wenn die Aktivierungseinrichtung 18 bzw. die Halterungen 19 zusammen mit den Andrückrollen 13 mittels des Stellglieds 16 quer zur Längsrichtung des Verstärkungsprofils 1 verfahren werden können. Dadurch ist gewährleitet, dass die Aktivierungseinrichtung 18 relativ zu den Andrückrollen 13 immer die gleiche Position einnimmt, dass beispielsweise die eine Andrückrolle 13 immer mittig zur Aktivierungseinrichtung 18 ausgerichtet ist.

Mit der Aktivierungseinrichtung 18 kann zum Beispiel ein wärme- oder strahlungsempfindliches Verbindungsmaterial aktiviert werden, um die feste Verbindung der Flächenstruktur 7 mit dem Stringer 1 herzustellen. Die Aktivierungseinrichtung 18 muss von der Energieleistung so ausgelegt sein, dass sie durch die Flansche 11 oder die Verbindungspads 12 hindurch das Verbindungsmaterial aktiviert, zum Beispiel erwärmt, um ihm zum Beispiel eine zähflüssige Konsistenz zu geben in der er seine volle Verbindungswirkung entfalten kann. Hinter dem Fügewerkzeug 4 kann zur Unterstützung des Abkühlens und/oder Aushärten des aktivierten, zum Beispiel erwärmten Verbindungsmaterials, kalte Luft auf die gefügten Stellen geblasen werden oder auf andere Weise eine Beschleunigung der Abkühlung bzw. des Abtransports überschüssiger Energie bewirkt werden. Zum Beispiel könnten in der Auflagefläche des Unterbaus 8 Bohrungen vorgesehen sein, in denen kaltes Wasser oder ein anderes Kühlmittel an die bereits gefügten Bereiche herangeführt wird, um für eine schnelle Abkühlung zu sorgen.

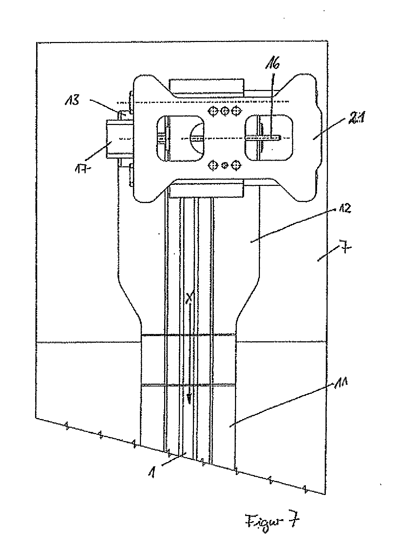

Die Figur 7 zeigt das Fügewerkzeug 4 der Figur 5 von oben. In dieser Ansicht sind besonders gut die Bereiche unterschiedlicher Breite der Fügeflächen des Stringers zu sehen, die von den Verbindungspads 12 und den Flanschen 11 gebildet werden. Den oberen Abschluss des Fügewerkzeugs 4 bildet eine Verbindungsstruktur 21, ein Dockingport, mit der das Fügewerkzeug 4 mit dem Aktor 2 verbunden werden und zum Fügen entlang dem Stringer 1 gefühl werden kann.

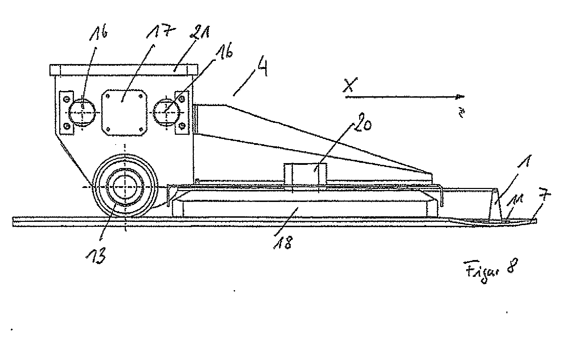

Die Figur 8 zeigt das Fügewerkzeug 4 der Figur 6 in einer Ansicht von der Seite, mit Andrückrollen 13, die in der Fügerichtung X hinter der Aktivierungseinrichtung 18 angeordnet sind. In der Seitenwand des Werkzeugs sind zwei Wellen gelagert von denen die in Fügerichtung X gesehen hintere Welle das Stellglied 16 für die Andrückrollen 13 und die vordere Welle das Stellglied 16 für die Aktivierungseinrichtung 18 ist. Beide Stellglieder 16 werden gemeinsam von dem Motor 17 angetrieben und können gleichzeitig in die gleiche Richtung und um den gleichen Verstellweg verstellt werden. Umfasst ist auch die Möglichkeit, dass die Andrückrollen 13 und die Aktivierungseinrichtung 18 immer gemeinsam aber um unterschiedliche Wege verstellt werden können, wobei der Verstellwege des einen abhängig ist vom Verstellweg des anderen. Um die Energie der Aktivierungseinrichtung 18 möglichst effektiv zu nutzen kann über der Aktivierungseinrichtung 18 ein Abschirmelement, zum Beispiel ein Blech, angeordnet sein, das nach oben entweichende Energie reflektiert.

### Kennzeichenliste:

- 1: Stringer
- 2: erster Aktor
- 3: zweiter Aktor
- 4: Fügewerkzeug
- 5: erster Greifer
- 6: zweiter Greifer
- 7: Flächenstruktur
- 8: Unterbau
- 9: Verbindungsteil
- 10: Greifarm
- 11: Flansch
- 12: Verbindungspad
- 13: Andrückkörper, Andrückrolle
- 14: Achse
- 15: Verbindungselement
- 16: Stellglied
- 17: Motor
- 18: Aktivierungseinrichtung
- 19: Halterung
- 20: Höhenverstellung
- 21: Verbindungsstruktur
- X: Fügerichtung

## Patentansprüche

1. Verfahren zum Verstärken einer Flächenstruktur (7), vorzugsweise einer Schalenstruktur, mit einem lang gestreckten, schlanken Stringer (1), bei dem:
a) der Stringer (1) an einer ersten Greifstelle mittels eines ersten Greifers (5) und an einer von der ersten Greifstelle axial beabstandeten zweiten Greifstelle mittels eines zweiten Greifers (6) gehalten wird,
b) der Stringer (1) mit dem ersten Greifer (5) an oder nahe bei der ersten Greifstelle an der Flächenstruktur (7) positioniert und fixiert wird,
c) während der zweite Greifer (6) den Stringer (1) an der zweiten Greifstelle relativ zu der Flächenstruktur (7) in definierter Position hält,
d) und ein Fügewerkzeuge (4) längs des Stringers (1) in eine von der Fixierstelle auf die zweite Greifstelle zu weisende Fügerichtung (X) bewegt wird und den Stringer (1) dabei in Fügerichtung (X) fortschreitend an die Flächenstruktur (7) drückt und mit dieser fügt.

2. Verfahren nach Anspruch 1, **dadurch gekennzeichnet, dass** der zweite Greifer (6) in der definierten Position den Stringer (1) an der zweiten Greifstelle in einem Abstand von der Flächenstruktur (7) hält und den Anstand in Abhängigkeit vom Fortschritt des Fügens verringert, so dass sich ein in Fügerichtung (X) vor dem Fügewerkzeug (4) befindlicher Längenbereich des Stringers (1) bei in Fügerichtung (X) fortschreitendem Fügewerkzeug (4) an die Flächenstruktur (7) anlegt und gefügt wird.

3. Verfahren nach einem der vorgehenden Ansprüche, **dadurch gekennzeichnet, dass** der zweite Greifer (6) während des Fügens zur Korrektur der Position des Stringers (1) auf der Flächenstruktur (7) quer zur Fügerichtung (X) bewegt werden kann.

4. Verfahren nach einem der vorgehenden Ansprüche, **dadurch gekennzeichnet, dass** auf einem beim Fügen die Flächenstruktur (7) kontaktierender Flächenbereich des Stringers (1) oder auf der Flächenstruktur (7) ein Verbindungsmaterial aufgebracht ist, das bei Raumtemperatur eine lösbare oder unlösbare Haftung des Stringers (1) auf der Flächenstruktur (7) bewirkt und/oder zum Fügen durch Druck und/oder Wärmezufuhr aktiviert werden kann.

5. Verfahren nach einem der vorgehenden Ansprüche, **dadurch gekennzeichnet, dass** die Greifer (5, 6) und/oder das Fügewerkzeug im Raum gesteuert oder geregelt automatisch bewegbaren Aktoren (2, 3), vorzugsweise Roboterarmen von beispielsweise Industrierobotern, bewegt werden.

6. Verfahren nach einem der vorgehenden Ansprüche, **dadurch gekennzeichnet, dass** der erste Greifer (5) und das Fügewerkzeug (4) gemeinsam von im Raum gesteuert oder geregelt automatisch bewegbaren Aktor (2, 3) bewegt werden und der erste Greifer (5) zum Fixieren des Stringers (1) von dem Aktor (2, 3) getrennt wird, während das Fügewerkzeug (4) am Aktor (2, 3) verbleibt.

7. Verfahren nach einem der vorgehenden Ansprüche, **dadurch gekennzeichnet, dass** das Verbindungsmaterial mit dem Fügewerkzeug (4) zum Fügen in einem einzigen Lauf aktiviert und auf die Flächenstruktur (7) gedrückt und verfestigt wird oder der Stringer (1) in einem ersten Lauf mit dem Fügewerkzeug (4) an die Flächenstruktur (7) angedrückt wird und dadurch auf der Flächenstruktur (7) vorläufig haftet und in einem zweiten Lauf das Verbindungsmaterial mit einem weiteren Fügewerkzeug durch Aktivieren ohne Drücken verfestigt und dadurch die Endfestigkeit der Verbindung zwischen dem Stringer (1) und der Flächenstruktur (7) hergestellt wird.

8. Verfahren nach einem der vorgehenden Ansprüche, **dadurch gekennzeichnet, dass** mehrere nebeneinander auf der Flächenstruktur (7) positionierte und fixierte Stringer (1) gleichzeitig mit der Flächenstruktur (7) gefügt werden.

9. Vorrichtung zum Fügen eines Stringers (1) mit einer Flächenstruktur (7), die Vorrichtung umfassend:
a) optional einen Unterbau (8), auf dem die Flächenstruktur (7) flächig zumindest in dem Bereich, in dem der Stringer (1) aufgebracht wird, abstützbar ist,
b) wenigstens zwei Greifer (5, 6) zum Greifen, Halten und Platzieren des Stringers (1) auf der Flächenstruktur (7),
c) einer Steuerung, die die Bewegungen der Greifer (5, 6) zueinander koordiniert steuert,
d) ein Fügewerkzeug (4) zum Fügen des Stringers (1) mit der Flächenstruktur (7),
e) und wenigstens einen im Raum automatisch bewegbaren Aktor (2, 3),
f) wobei ein Aktor (2, 3) das Fügewerkzeug (4) zum Fügen entlang der Längsachse des Stringers (1) führt.

10. Vorrichtung nach Anspruch 9, **dadurch gekennzeichnet, dass** das Fügewerkzeug (4) ein Andrückkörper (13), beispielsweise eine Druckrolle oder ein Gleitschuh, und/oder eine Aktivierungseinrichtung (18) aufweist, wobei der wenigstens eine Andrückkörper (13) in Längsrichtung des Stringers (1) vor oder hinter der Aktivierungseinrichtung (18) angeordnet ist oder je wenigstens ein Andrückkörper (13) vor und hinter der Aktivierungseinrichtung (18) angeordnet ist.

11. Vorrichtung nach einem der Ansprüche 9 oder 10, **dadurch gekennzeichnet, dass** das Fügewerkzeug (4) wenigstens einen Stellmotor (17) aufweist, mit dem der Andruckkörper (13) oder die Andrückkörper (13) und/oder die Aktivierungseinrichtung (18) oder die Aktivierungseinrichtungen (18) quer zur Längsrichtung des Stringers (1) verstellbar sind und/oder der oder die Andrückkörper (13) zum Fügen bevorzugt in einem Profilradius (α) des Stringers (1) laufen und dadurch den Stringer (1) beim Fügen relativ zur Flächenstruktur (7) ausrichtet.

12. Greif- und Fügewerkzeug zum Greifen eines ersten Bauteils und Fügen mit einem zweiten Bauteil, vorzugsweise zur Verwendung in dem Verfahren nach einem der vorhergehenden Ansprüche, das Greif- und Fügewerkzeug umfassend:
a) einen Dockingport zum automatischen Andocken an einen und Abdocken von einem im Raum automatisch bewegbaren Aktor (2, 3),
b) einen mit dem Dockingport verbundenen ersten Greifer (5) zum Greifen des ersten Bauteils, vorzugsweise des Stringers (1) nach einem der vorhergehenden Ansprüche,
c) einen mit dem Dockingport verbundenen Andrückkörper (13), vorzugsweise eine Andrückrolle, zum Andrücken des ersten Bauteils an das zweite Bauteil, vorzugsweise an die Flächenstruktur (7) nach einem der vorhergehenden Ansprüche,
d) und eine mit dem Dockingport verbundene Aktivierungseinrichtung (18) zum Aktivieren des ersten und/oder zweiten Bauteils im Bereich oder in unmittelbarer Nähe des Andrückkörpers (13),
e) wobei der erste Greifer (5) mit dem Dockingport lösbar verbunden ist und mittels eines über den Dockingport leitbaren Steuersignals von diesem automatisch abgedockt werden kann.

13. Greif- und Fügewerkzeug nach dem vorhergehenden Anspruch, **dadurch gekennzeichnet, dass** der erste Greifer (5) dafür ausgebildet ist, das erste Bauteil und das zweite Bauteil im Eingriff nur mit dem ersten und dem zweiten Bauteil aneinander zu halten.
